# EUROPEAN PATENT SPECIFICATION

(11) **EP 2 537 279 B1**
(45) Date of publication and mention of the grant of the patent: **03.10.2018**
(21) Application number: 11705165.6
(22) Date of filing: 15.02.2011
(51) Int. Cl.: H04L 5/00, H04L 27/34

(54) **Symbol generation in different multicarrier systems operating in overlapped frequency bandwidths**
Symbolgenerierung in verschiedenen, in überlappenden Frequenzbändern operierenden Mehrträger-Übertragungssystemen
Génération des symboles pour des systémes multi-porteuses differents et opérés dans des bandes de fréquences superposées

(30) Priority: 23.03.2010 US 316815 P; 15.02.2010 US 304777 P
(43) Date of publication of application: 26.12.2012
(73) Proprietor: Lantiq Beteiligungs-GmbH & Co. KG, 85579 Neubiberg (DE)
(72) Inventor: KIM, Joon, Bae, Lexington, MA 02420 (US); OKSMAN, Vladimir, Morganville, NJ 07751 (US); GROSS, Richard, Acton, MA 01720 (US)
(74) Representative: Sticht, Andreas
(86) International application number: PCT/EP2011/000696
(87) International publication number: WO 2011/098298

(56) References cited:
- EP-A2- 1 538 802
- WO-A1-03/036849
- WO-A1-2010/015102
- US-A1- 2004 081 131
- US-A1- 2007 010 255
- US-A1- 2007 081 489
- US-A1- 2009 109 950
- US-A1- 2009 304 100

## Description

### BACKGROUND

Packet-based communication technologies, such as ITU-T G.9960/G.9961 G.hn, HomePNA, HomePlug® AV and Multimedia over Coax Alliance (MoCA), are becoming increasingly important due to the significant advances in broadband networks capable of delivering multimedia-rich IP-based services. As the demand for such services increases, service providers are looking for improved ways to distribute digital content within consumers' homes. The aforementioned technologies are designed specifically for this purpose.

Digital subscriber line (DSL) technology may be used to transform an ordinary telephone line (e.g., copper wire twisted-pair) into a broadband communication link. DSL technology achieves this by sending signals over the telephone line in previously unused high frequencies.

Over the years, DSL technology has evolved into a family of specific, standardized implementations. These various implementations, which include among others Asymmetric Digital Subscriber Line (ADSL), ADSL2, ADSL2+, Very high speed DSL (VDSL), VDSL2, G.Lite, and High bit rate Digital Subscriber Line (HDSL), offer a variety of transmission speeds and transmission distances. It is common to refer to the various DSL implementations that have evolved over the years collectively as xDSL.

Wireless communication technology may be used in connection with DSL technology to increase the general mobility of devices that are used to access a broadband communication link. A common wireless communication technology used in connection with DSL technology and other broadband services includes the various IEEE 802.11 standards for wireless LANs.

Various xDSL implementations typically employ either Carrier-less Amplitude and Phase (CAP) modulation or discrete multi-tone (DMT) modulation. CAP modulation is a variation of quadrature amplitude modulation (QAM). CAP modulation produces the same form of signal as QAM without requiring in-phase and quadrature carrier components. DMT modulation is a modulation method in which the available bandwidth of a communication channel is divided into numerous orthogonal sub-channels. Sub-channel is also referred to as sub-carrier or tone. Each tone of a DMT communication system' is capable of acting as a communications sub-channel that carries information between a transmitter and a receiver. Multicarrier systems that make use of DMT modulation may also be referred to as systems that employ Orthogonal Frequency Division Multiplexing (OFDM). OFDM is also the modulation method employed by many wireless communication technologies, including ITU G.hn, HomePlug® AV, MoCA, IEEE 802.11 and IEEE 802.16 (WiMAX). Technologies implementing DMT, OFDM and other multicarrier modulation schemes are generalized herein as being multicarrier systems.
From WO 03/036849 A1, EP 1 538 802 A2 or WO 2010/015102 A1 communication systems are known where different multicarrier apparatuses, UEs in this case, use different sub-carrier spacing when communicating.
Document US 2009/304,100 A1 discloses that a symbol duration is typically chosen to be reciprocal of the tone spacing.

The independent claims define the invention in various aspects. The dependent claims define preferred embodiments of the invention in the various aspects.

In a first aspect, the invention relates to a method comprising determining first and second multicarrier apparatuses use different sub-carrier spacing; and by the second multicarrier apparatus, generating consecutive identical symbols that have a combined time duration equal to a time duration of a single symbol length of the first multicarrier apparatus. The exact steps and operations performed by said method are provided in independent claim 1. At least one effect of the embodiment of the invention in the first aspect may be that the first apparatus and the second apparatus may be aligned when the second apparatus transmits identical symbols over a time duration equal to a length of a symbol used by the first apparatus.

An embodiment of the method according to the invention in the first aspect further comprises identifying sub-carriers that are common to the first and second multicarrier apparatuses. At least one effect of the method in this embodiment may be that the first and second multicarrier apparatuses, absent other hindrance, can be made to use some or all of the identified common sub-carriers to communicate.

An embodiment of the method according to the invention in the first aspect further comprises, by both the first and second multicarrier apparatuses, sending a beacon message on a sub-carrier. An embodiment comprises sending messages on a plurality of sub-carriers, in particular on each sub-carrier. An embodiment of the method according to the invention in the first aspect further comprises, at the second multicarrier apparatus, receiving beacon messages sent by the first multicarrier apparatus, and/or vice versa. At least one effect of the method in this embodiment may be, using such beacon message, a sub-carrier common to both nodes may be identified. In particular, in the embodiment that comprises sending messages on a plurality of sub-carriers, such sub-carriers common to both nodes may be identified.

An embodiment of the method according to the invention in the first aspect comprises, at the second multicarrier apparatus, determining the sub-carrier spacing used by the first multicarrier apparatus using the beacon messages sent by the first multicarrier apparatus. At least one effect of the method in this embodiment may be to enable the establishment of a communication link between the first and the second apparatus using shared (overlapped) frequency bands.

In a second aspect, the invention relates to a multicarrier apparatus, comprising a controller and a storage coupled to the controller. The storage includes instructions that, when executed by the controller, determine first and second multicarrier apparatuses use different sub-carrier spacing, and generate consecutive identical symbols that have a combined time duration equal to a time duration of a single symbol length of the first multicarrier apparatus. The exact structure of said apparatus is defined by independent claim 5.

In an embodiment, the apparatus according to the invention in the second aspect is further adapted to identify sub-carriers that are common to the first and second multicarrier apparatuses.

In an embodiment, the apparatus according to the invention in the second aspect is further adapted to send beacon messages on each sub-carrier used by the multicarrier apparatus. In an embodiment, the apparatus according to the invention in the second aspect is further adapted to receive beacon messages sent by the first multicarrier apparatus.

In an embodiment, the apparatus according to the invention in the second aspect is further adapted to determine the sub-carrier spacing used by the first multicarrier apparatus using the beacon messages sent by the first multicarrier apparatus. The present invention is defined by the scope of the appended claims. In the following, any embodiment(s) referred to and not falling within the scope of said appended claims is (are) to be interpreted as example(s) useful for understanding the present invention.

### BRIEF DESCRIPTION OF THE DRAWINGS

The detailed description refers to the accompanying figures. In the figures, the left-most digit(s) of a reference number identifies the figure in which the reference number first appears. The use of the same reference number in different instances in the description and the figures may indicate similar or identical items.
FIG. 1 illustrates an exemplary communication arrangement that employs a plurality of multicarrier apparatuses. In one implementation, the multicarrier apparatuses are Orthogonal Frequency Division Multiplexing (OFDM) apparatuses.
FIG. 2 illustrates an exemplary transceiver apparatus that may be used as a transmitting and receiving apparatus in a multicarrier arrangement or system.
FIG. 3 illustrates the concept of overlapping frequency bands, where a first of the overlapping frequency bands may be used by a first node and a second of the overlapping frequency bands may be used by a second node.
FIG. 4 illustrates the concept of overlapping frequency bands, where tone or sub-carriers in a first band are spaced differently than the tone or sub-carriers in a second band.
FIG. 5 illustrates the use of repeated symbols to align nodes (e.g., multicarrier apparatuses).
FIG. 6 is a flow diagram of a procedure useable to enable at least two multicarrier apparatuses or nodes that are operating using diverse tone or sub-carrier spacings to align and communicate.

### DETAILED DESCRIPTION

At least one implementation herein enables at least two multicarrier apparatuses or nodes operating on overlapped frequency bands with different tone spacing to communicate. In particular, a first node may use a tone spacing that is less than the tone spacing used by a second node. The first and second nodes may communicate and are thus aligned when the second node transmits identical symbols over a time duration equal to a length of a symbol used by the first node.

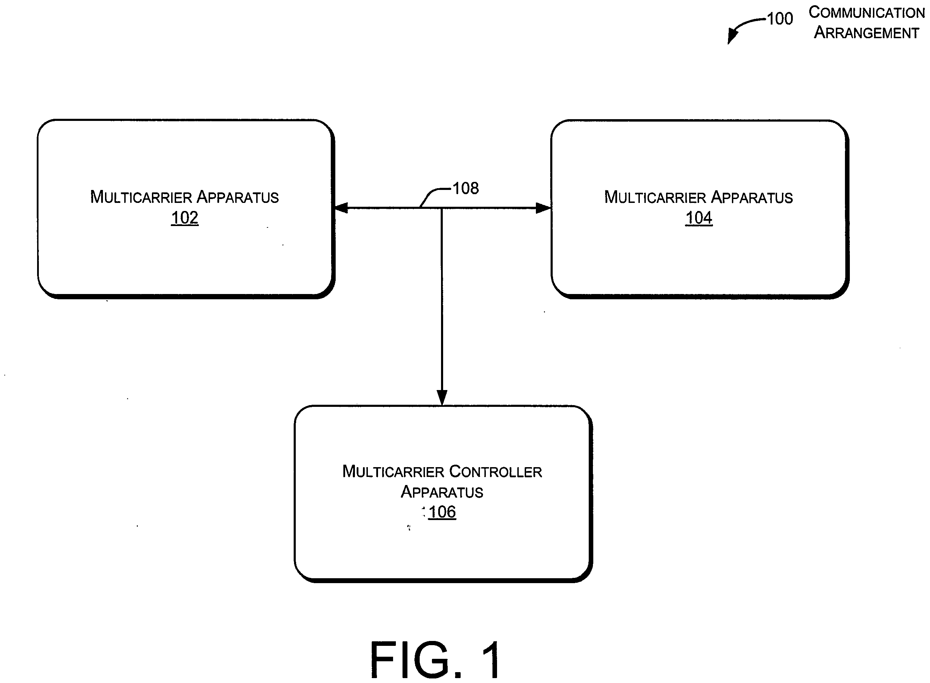

FIG. 1 illustrates an exemplary communication arrangement 100 that employs at least two multicarrier apparatuses or nodes 102 and 104. The exemplary communication arrangement 100 may also employ a multicarrier controller apparatus or controller node 106. The multicarrier controller apparatus or controller node 106 may have the same, similar or different functionality as the nodes 102 and 104. In one implementation, the multicarrier apparatuses 102, 104 and 106 are Orthogonal Frequency Division Multiplexing (OFDM) apparatuses.

The multicarrier apparatuses 102, 104 and 106 may communicate through a communication channel 108. The communication channel 108 may be realized as a wireless communication medium, a wireline communication medium (e.g., coaxial cable, twisted pair of copper wires, power line wiring, optical fiber, etc.), or combinations thereof. Accordingly, the multicarrier apparatuses 102, 104 and 106 may include structure and functionality that enable signal communication over such medium. Such structure and functionality may include one or more antennas, integrated wireline interfaces, and the like. Depending on the implementation, the multicarrier apparatuses 102, 104 and 106 may communicate with one another directly (peer-to-peer mode) or the multicarrier apparatuses 102 and 104 may communicate via the controller apparatus 106.

In one implementation, the exemplary communication arrangement 100 may be a home network and the multicarrier controller apparatus 106 may be an access point of the home network. For example, in the implementation the controller apparatus 106 may be a residential gateway that distributes broadband services to the multicarrier apparatuses 102 and 104. The multicarrier apparatuses 102 and 104 may be associated with digital content destinations in the home, but may also be associated with digital content sources, such as digital video recorders (DVR), computers providing streaming video, televisions, entertainment centers, and the like.

Furthermore, the multicarrier apparatuses 102, 104 and 106 may be enabled to communicate using packet-based technology (e.g., ITU G.hn, HomePNA, HomePlug® AV and Multimedia over Coax Alliance (MoCA)) and xDSL technology. Such xDSL technology may include Asymmetric Digital Subscriber Line (ADSL), ADSL2, ADSL2+, Very high speed DSL (VDSL), VDSL2, G.Lite, and High bit rate Digital Subscriber Line (HDSL). In addition, the multicarrier apparatuses 102, 104 and 106 may be enabled to communicate using IEEE 802.11 and IEEE 802.16 (WiMAX) wireless technologies.

Signals exchanged between the multicarrier apparatuses 102, 104 and 106 may include multicarrier symbols that each include a plurality of tones or sub-channels. Each of the tones within a multicarrier symbol may have data bits modulated thereon that are intended for delivery from one of the multicarrier apparatuses 102, 104 and 106 to another.

In one implementation, the multicarrier apparatuses 102 and 104 are high-profile devices. A high-profile device may be considered a device operating using a profile that has a higher bandwidth relative to a low-profile device. The profile of a given device may be a band plan that specifies multicarrier modulation parameters such as the range of frequency, sub-carrier spacing, cyclic prefix, and so on. The multicarrier apparatuses 102 and 104 may establish a communication link that enables exchange of packets between the apparatuses 102 and 104. In another implementation, the apparatuses 102 and 104 are low-profile devices. A low-profile device may be considered a device operating using a profile that has a lower bandwidth relative to a high-profile device. The multicarrier controller apparatus 106 may be a high or low-profile device. A low-profile device can communicate directly to a high-profile device as long as two profiles share the common frequency region. In general, the multicarrier controller apparatus 106 may manage traffic between the multicarrier apparatuses 102 and 104. However, the apparatuses 102 and 104 may also include functionality that enables them to manage their own communications and/or manage communications of other multicarrier apparatuses.

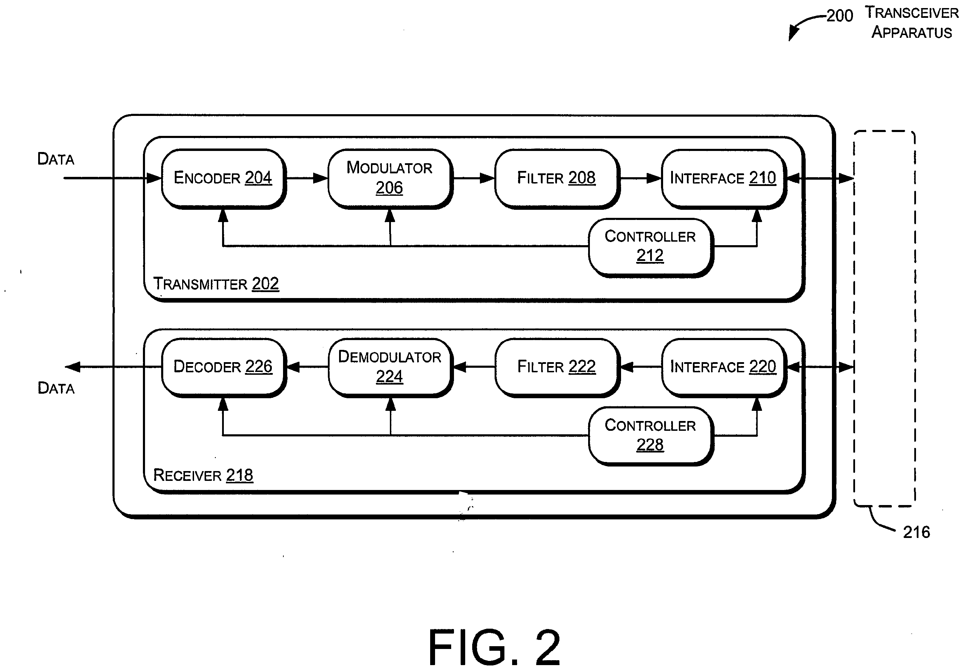

FIG. 2 illustrates an exemplary transceiver apparatus 200 that may be used as a transmitting and receiving apparatus in a multicarrier arrangement or system. The multicarrier apparatuses 102, 104 and 106 illustrated in FIG. 1 may be implemented in the same or similar manner as the exemplary transceiver apparatus 200.

The transceiver apparatus 200 may include a transmitter 202 that incorporates a number of different elements. For example, the transmitter 202 may include an encoder 204, a modulator 206, a filter 208, an interface 210 and a controller 212. As used herein, the term "controller" is meant generally to include all types of digital processing devices including, without limitation, digital signal processors (DSPs), reduced instruction set computers (RISC), general-purpose (CISC) processors, microprocessors, gate arrays (e.g., FPGAs), PLDs, reconfigurable compute fabrics (RCFs), array processors, secure microprocessors, and application-specific integrated circuits (ASICs). Such digital processors may be contained on a single unitary IC die, or distributed across multiple components.

The encoder 204 may be capable of receiving data that is for communication to a receiving device coupled to the transceiver apparatus 200 via a wireless or wireline medium 216. More specifically, the encoder 204 may be capable of translating incoming data bit streams into in-phase and quadrature components for each of the plurality of tones. The encoder 204 may be arranged to output a number of symbol sequences that are equal to the number of tones available to the system. The modulator 206 may be capable of receiving symbol sequences to produce a modulated signal in the form of a discrete multi-tone signal. The modulator 406 may pass the modulated signal to the filter 408 to undergo various filtering and then the filtered signal may be passed to the interface 210 for communication over the medium 216 to a receiving device.

The transceiver apparatus 200 may also include a receiver 218 that is capable of receiving modulated multi-tone signals communicated over the medium 416 from a transmitting device. The receiver 218 may include an interface 220, a filter 222, a demodulator 224, a decoder 226 and a controller 228. Alternatively, the transceiver apparatus 200 may implement a single controller, instead of the illustrated controllers 212 and 228. Signals received by the receiver 218 may be passed to the filter 222 via the interface 220. After received signals undergo filtering by way of the filter 222, the filtered signals may be demodulated by the demodulator 224. The demodulated signals may be passed to and processed by the decoder 226. The decoder 226 produces data bit streams for consumption by a computing device, or the like. Effectively, the demodulator 224 and the decoder 226 perform the opposite functions of the modulator 206 and the encoder 204, respectively.

Referring collectively to FIGS. 1-2, as will be appreciated, the communication arrangement 100 may operate such that nodes (e.g., multicarrier apparatuses 102 and 104) that are hidden from one another will transmit during different time slots or at different times during the same time slot. During network operation, the nodes monitor messages on the channel 108 (e.g., the medium communication 216) and identify the other nodes from which the messages were transmitted. For example, multicarrier apparatuses 102 may use its receiver 218 to continuously or intermittently "listen" to messages on the communication medium 216. The multicarrier apparatus 102 may then determine whether the receiver 218 "heard" a message from the multicarrier apparatus 104, and/or one or more other multicarrier apparatuses.

After monitoring, the nodes may send information messages to the multicarrier controller apparatus 106. Each information message may indicate the other nodes that a monitoring node "heard" during monitoring. In one implementation, the controller 212 of the multicarrier apparatus 102 may instruct the transmitter 202 to transmit an information message indicating that it heard messages from the multicarrier apparatus 104, and/or one or more other multicarrier apparatuses. In one embodiment, these information messages may be transmitted in bitmap format, where certain one or more bits specify whether or not the transmitting node detected a message from a different node.

In one implementation, an information message from a node may include one or more parameters that specify one or more time slots and/or cycles in which the node will be inactive. In another implementation, such parameters may be sent in a separate message, or another communication from the node. The node will become active again after the inactive period.

In another implementation, an information message from a node may include one or more parameters that specify one or more time slots and/or cycles in which the node will be inactive. In another implementation, such parameters may be sent in a separate message, or another communication from the node. The parameters sent by the node may include one or more parameters that specify a number of time slots and/or cycles that the node will be inactive, and a number of time slots and/or cycles that the node will be active after the inactive period. An additional parameter sent by the node may specify a particular time slot and/or cycle in which the inactive period will commence.

In yet another implementation, an information message from a node may include one or more parameters that specify one or more time slots and/or cycles in which the node will be active. In another implementation, such parameters may be sent in a separate message, or another communication from the node. The parameters sent by the node may include one or more parameters that specify a number of time slots and/or cycles that the node will be active, and a number of time slots and/or cycles that the node will be inactive after the active time slots and/or cycles. An additional parameter sent by the node may specify a particular time slot and/or cycle in which the active period will commence. Other possible implementations for identifying active and inactive time slots or cycles will be discussed in greater detail in the following.

The multicarrier controller apparatus 106 may use its receiver 218 to receive the information messages from the multicarrier apparatuses 102 and 104, and/or other nodes associated with the communication arrangement 100. The controller of the multicarrier controller apparatus 106 may then determine which nodes can (and cannot) "hear" one another. The information may be used by the multicarrier controller apparatus 106 to assign nodes in the communication arrangement 100 to one or more time slots or transmission opportunities associated with one or more cycles.

The multicarrier apparatuses 102 and 104, and/or other nodes, may receive the control message via their receivers 418. The multicarrier apparatuses 102 and 104, and/or other nodes, may then use their controllers to parse the control message and configure their transmitter 202 to transmit in an assigned time slot or transmission opportunity associated with one or more cycles. The multicarrier apparatuses 102 and 104, and/or other nodes, may also use the information of the control message to determine which nodes will be inactive and/or active in a given time slot(s) and/or cycle(s). Based on this information, the multicarrier apparatuses 102 and 104, and/or other nodes, may use their controllers to configure their transmitter 202 to limit transmitting data to active or available nodes.

In another implementation, the multicarrier apparatuses 102 and 104 may operate on two or more frequency bands that are overlapped to one another. The apparatus 102 or 104 operating on one band is not required to interoperate with the apparatus 102 or 104 operating on other bands. The apparatuses 102 and 104 are only required to coexist with the other apparatuses. Here interoperability means the ability to establish a direct communication link between nodes using the shared (overlapped) frequency bands whereas coexistence means the ability to operate without interfering one another.

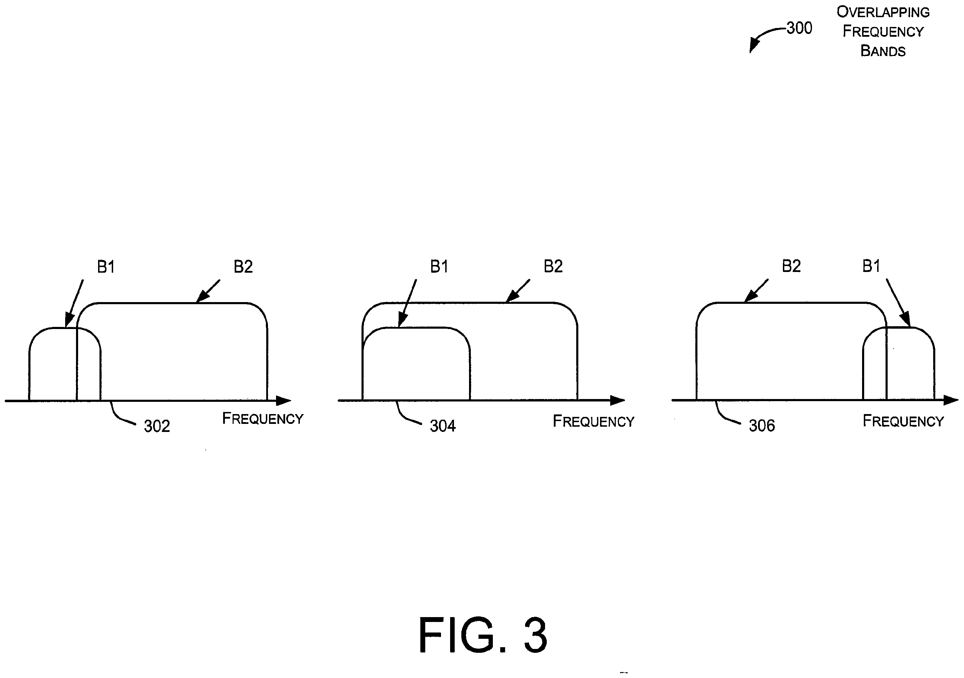

FIG. 3 illustrates the concept of overlapping frequency bands 300. In example 302, band 1 (B1) partially overlaps the beginning of band 2 (B2). In example 304, B1 completely overlaps a portion of B2. And in example 306, B1 partially overlaps the end of B2. In one implementation, the apparatus 102 is operating in B1 and apparatus 104 is operating in B2.

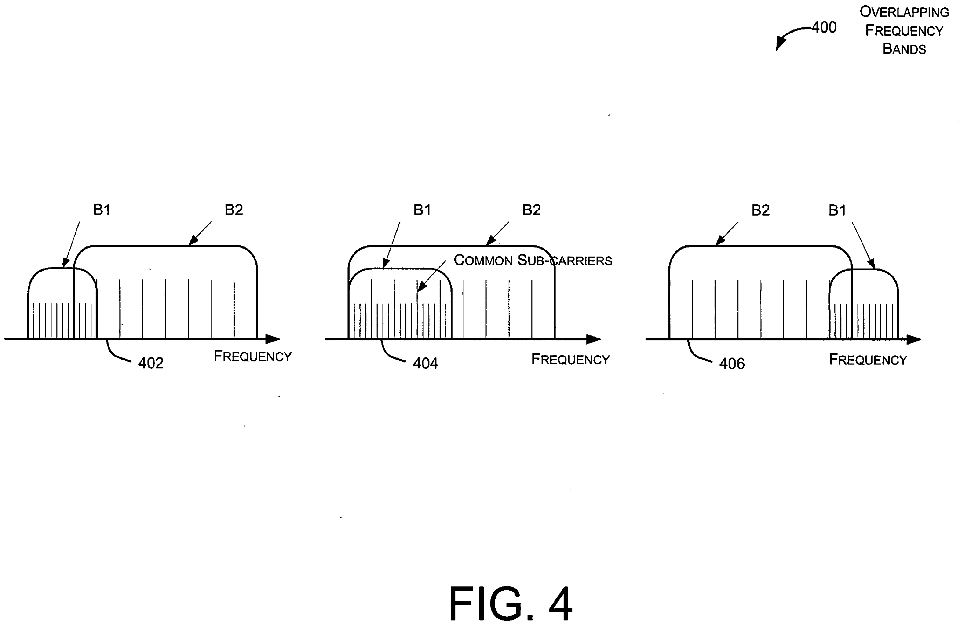

FIG. 4 illustrates the concept of overlapping frequency bands 400, where tone or sub-carriers in B1 are spaced differently than the tone or sub-carriers in B2. In example 402, B1 partially overlaps the beginning of B2. In example 404, B1 completely overlaps a portion of B2. And in example 406, B1 partially overlaps the end of B2. In one implementation, the apparatus 102 is operating in B1 and apparatus 104 is operating in B2. Absent the operational functionalities described herein, apparatus 102 and 104 would be unable to communicate.

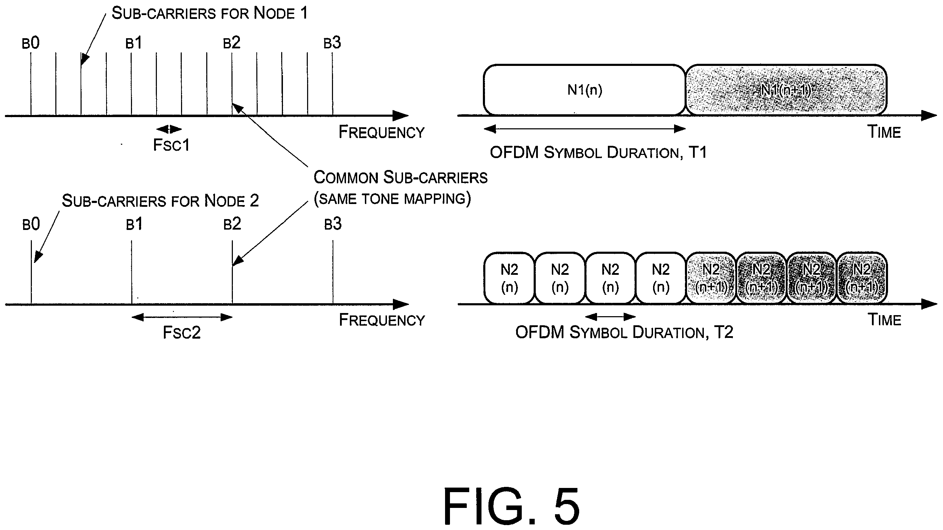

FIG. 5 illustrates the use of repeated symbols to align nodes (e.g., apparatuses 102 and 104). For example, as shown in FIG. 5, if Fsc2 = 4 × Fsc1, then T1 = 4 × T2 where Ti denotes the symbol duration of the OFDM symbol of node i, Ni. If the node 2 cascades 4 identical symbols N2 with the same tone mapping as long symbol N1, then both nodes can detect or decode each other.

Exemplary procedures are described below. It should be understood that certain acts need not be performed in the order described, and may be modified, and/or may be omitted entirely, depending on the circumstances. The acts described may be implemented and executed by a computer, processor or other computer device, such as a wireless or wireline device, based on instructions stored on one or more computer-readable storage media associated with the wireless or wireline device and/or associated with other storage media not co-located with the device. The computer-readable storage media can be any available media that can be accessed by a computer device to implement the instructions stored thereon. As used herein, the term "instructions", "computer program" or "software" is meant to include any sequence or human or machine cognizable acts which perform a function. The exemplary procedures and acts may be rendered in virtually any programming language or environment including, for example, C/C++, Fortran, COBOL, PASCAL, assembly language, markup languages (e.g., HTML, SGML, XML, VoXML), and the like, as well as object-oriented environments such as the Common Object Request Broker Architecture (CORBA), Java™ (including J2ME, Java Beans, etc.), Binary Runtime Environment (BREW), and the like. Furthermore, the disclosed exemplary procedures and associated acts may be hardware and firmware as well, or alternatively as some combination thereof.

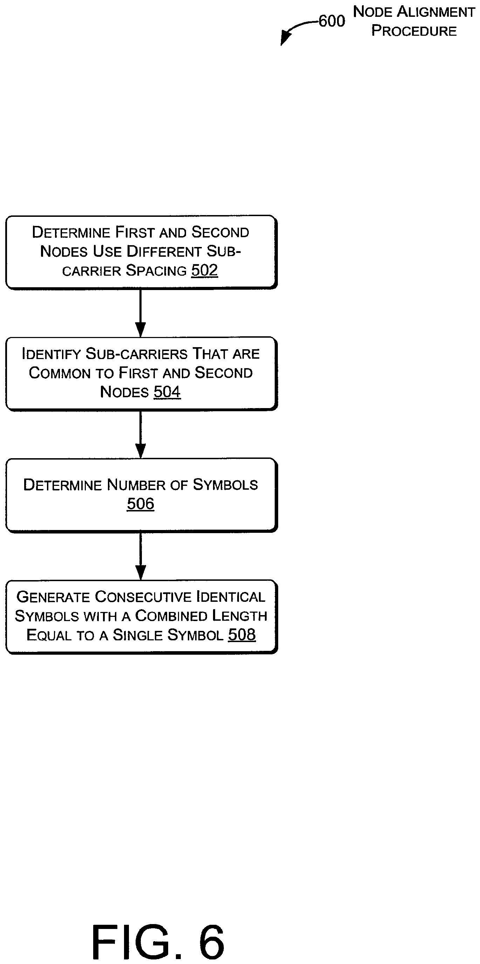

FIG. 6 is a flow diagram of a procedure 600 useable to enable at least two multicarrier apparatuses or nodes that are operating using diverse tone or sub-carrier spacings to align and communicate. At Act 502, it is determined that a first and second nodes or multicarrier apparatuses use different sub-carrier or tone spacings. In one implementation, each of the first and second nodes may repeatedly send, using their respective sub-carriers, a beacon message or another message decodable by a receiving node. The beacon message sent by each of the first and second nodes may identify the frequency period that separates consecutive sub-carriers. Using such received information, sub-carriers common to both nodes may be identified. Alternatively, the first and second nodes may use received beacon messages to empirically determine the frequency period that separates consecutive sub-carriers.

In accordance with Act 502, at Act 504, the first and second nodes identify sub-carriers that are common to both nodes. At Act 506, the node (e.g., the second node) having the greater sub-carrier separation of the first and second nodes determines the number of symbols that equals a single symbol used by the other node (e.g., the first node). At Act 508, the second node generates consecutive identical symbols with a combined length equal to a single symbol used by the first node.

While the exemplary implementations illustrated herein may show the various components of the arrangement collocated, it is to be appreciated that the various components of the arrangement may be located at distant portions of a distributed network, such as a communications network and/or the Internet, or within a dedicated secure, unsecured and/or encrypted arrangement. Thus, it should be appreciated that the components of the arrangements may be combined into one or more apparatuses, such as a modem, or collocated on a particular node of a distributed network, such as a telecommunications network. Moreover, it should be understood that the components of the described arrangements may be arranged at any location within a distributed network without affecting the operation of the arrangements. For example, the various components can be located in a Central Office modem (CO, ATU-C, VTU-O), a Customer Premises modem (CPE, ATU-R, VTU-R), an xDSL management device, or some combination thereof. Similarly, one or more functional portions of the arrangement may be distributed between a modem and an associated computing device.

The above-described arrangements, apparatuses and methods may be implemented in a software module, a software and/or hardware testing module, a telecommunications test device, a DSL modem, an ADSL modem, an xDSL modem, a VDSL modem, a linecard, a G.hn transceiver, a MOCA transceiver, a Homeplug transceiver, a powerline modem, a wired or wireless modem, test equipment, a multicarrier transceiver, a wired and/or wireless wide/local area network system, a satellite communication system, network-based communication systems, such as an IP, Ethernet or ATM system, a modem equipped with diagnostic capabilities, or the like, or on a separate programmed general purpose computer having a communications device or in conjunction with any of the following communications protocols: CDSL, ADSL2, ADSL2+, VDSL1, VDSL2, HDSL, DSL Lite, IDSL, RADSL, SDSL, UDSL, MOCA, G.hn, Homeplug or the like.

Additionally, the arrangements, procedures and protocols of the described implementations may be implemented on a special purpose computer, a programmed microprocessor or microcontroller and peripheral integrated circuit element(s), an ASIC or other integrated circuit, a digital signal processor, a flashable device, a hard-wired electronic or logic circuit such as discrete element circuit, a programmable logic device such as PLD, PLA, FPGA, PAL, a modem, a transmitter/receiver, any comparable device, or the like. In general, any apparatus capable of implementing a state machine that is in turn capable of implementing the methodology described and illustrated herein may be used to implement the various communication methods, protocols and techniques according to the implementations.

Furthermore, the disclosed procedures may be readily implemented in software using object or object-oriented software development environments that provide portable source code that can be used on a variety of computer or workstation platforms. Alternatively, the disclosed arrangements may be implemented partially or fully in hardware using standard logic circuits or VLSI design. The communication arrangements, procedures and protocols described and illustrated herein may be readily implemented in hardware and/or software using any known or later developed systems or structures, devices and/or software by those of ordinary skill in the applicable art from the functional description provided herein and with a general basic knowledge of the computer and telecommunications arts.

Moreover, the disclosed procedures may be readily implemented in software that can be stored on a computer-readable storage medium, executed on programmed general-purpose computer with the cooperation of a controller and memory, a special purpose computer, a microprocessor, or the like. In these instances, the arrangements and procedures of the described implementations may be implemented as program embedded on personal computer such as an applet, JAVA® or CGI script, as a resource residing on a server or computer workstation, as a routine embedded in a dedicated communication arrangement or arrangement component, or the like. The arrangements may also be implemented by physically incorporating the arrangements and/or procedures into a software and/or hardware system, such as the hardware and software systems of a test/modeling device.

The implementations herein are described in terms of exemplary embodiments. However, it should be appreciated that individual aspects may be separately implemented and one or more of the features of the various embodiments may be combined. The scope present invention is determined only be the scope of the appended claims.

For the purposes of this disclosure and the claims that follow, the terms "coupled" and "connected" have been used to describe how various elements interface. Such described interfacing of various elements may be either direct or indirect. Although the subject matter has been described in language specific to structural features and/or methodological acts, it is to be understood that the subject matter defined in the appended claims is not necessarily limited to the specific features or acts described. Rather, the specific features and acts are disclosed as preferred forms of implementing the claims. The specific features and acts described in this disclosure and variations of these specific features and acts may be implemented separately or may be combined.

## Claims

1. A method, comprising:
determining, at a second multicarrier apparatus (104), whether a first multicarrier apparatus (102) uses a first sub-carrier spacing (Fsc1) smaller than a second sub-carrier spacing (Fsc2) used by the second multicarrier apparatus (104), wherein the first multicarrier apparatus (102) and the second multicarrier apparatus communicate directly using a direct link,
identifying sub-carriers which are common to both multicarrier apparatuses (102, 104);
determining, by the second multicarrier apparatus (104), the number of symbols used by the second multicarrier apparatus that equals in time duration a single symbol used by the first multicarrier apparatus and
generating, by the second multicarrier apparatus (104), consecutive identical symbols (N2) that have a combined time duration equal to a time duration (T1) of said single symbol (N1) of the first multicarrier apparatus (102).

2. The method according to claim 1, further comprising, by both the first and second multicarrier apparatuses (102, 104), sending beacon messages on each sub-carrier.

3. The method according to any preceding claim, further comprising receiving at the second multicarrier apparatus (104) beacon messages sent by the first multicarrier apparatus (102).

4. The method according to claim 3, further comprising at the second multicarrier apparatus (104), determining the first sub-carrier spacing (Fsc1) used by the first multicarrier apparatus (102) using the beacon messages sent by the first multicarrier apparatus (102).

5. A multicarrier apparatus (104), comprising:
a controller; and a storage coupled to the controller and including instructions that when executed by the controller:
determine whether at least one further multicarrier apparatus (102) communicating with the multicarrier apparatus (104) using a direct link uses a first sub-carrier spacing (Fsc1) smaller than a second sub-carrier spacing (Fsc2) used by the multicarrier apparatus (104);
identify sub-carriers which are common to both multicarrier apparatuses (102, 104);
determine, by the multicarrier apparatus (104), the number of symbols used by the multicarrier apparatus (104) that equals in time duration a single symbol used by the further multicarrier apparatus and
generate consecutive identical symbols (N2) that have a combined time duration equal to a time duration (T1) of said single symbol (N1) of the at least one further multicarrier apparatus (102).

6. The apparatus according to claim 5, further to send beacon messages on each sub-carrier used by the multicarrier apparatus (104).

7. The apparatus according to any of claims 5 or 6, further to receive beacon messages sent by the further multicarrier (102) apparatus.

8. The apparatus according to claim 7, further to determine the first sub-carrier spacing (Fsc1) used by the further multicarrier apparatus (102) using the beacon messages sent by the further multicarrier apparatus (102).

## Patentansprüche

1. Verfahren, umfassend:
Bestimmen, an einer zweiten Mehrträgervorrichtung (104), ob eine erste Mehrträgervorrichtung (102) einen ersten Unterträgerabstand (Fsc1) verwendet, der kleiner ist als ein zweiter Unterträgerabstand (Fsc2), der von der zweiten Mehrträgervorrichtung (104) verwendet wird, wobei die erste Mehrträgervorrichtung (102) und die zweite Mehrträgervorrichtung direkt unter Verwendung eines direkten Links kommunizieren,
Identifizieren von Unterträgern, die beiden Mehrträgervorrichtungen (102, 104) gemeinsam sind;
Bestimmen, durch die zweite Mehrträgervorrichtung (104), der Anzahl der von der zweiten Mehrträgervorrichtung verwendeten Symbole, die in der Zeitdauer einem einzelnen von der ersten Mehrträgervorrichtung verwendeten Symbol entspricht, und
Erzeugen, durch die zweite Mehrträgervorrichtung (104), aufeinanderfolgender identischer Symbole (N2), die eine kombinierte Zeitdauer gleich einer Zeitdauer (T1) des einzelnen Symbols (N1) der ersten Mehrträgervorrichtung (102) haben.

2. Verfahren nach Anspruch 1, ferner umfassend das Senden von Bakenmeldungen auf jedem Unterträger sowohl durch die erste als auch die zweite Mehrträgervorrichtung (102, 104).

3. Verfahren nach einem der vorhergehenden Ansprüche, ferner umfassend das Empfangen durch die erste Mehrträgervorrichtung (102) gesendeten Bakenmeldungen an der zweiten Mehrträgervorrichtung (104).

4. Verfahren nach Anspruch 3, ferner umfassend an der zweiten Mehrträgervorrichtung (104) das Bestimmen des ersten Unterträgerabstands (Fsc1), der von der ersten Mehrträgervorrichtung (102) unter Verwendung der von der ersten Mehrträgervorrichtung (102) gesendeten Bakenmeldungen verwendet wird.

5. Mehrträgervorrichtung (104), umfassend:
einen Controller; und einen Speicher, der mit dem Controller gekoppelt ist und Anweisungen enthält, die, wenn sie von dem Controller ausgeführt werden:
Bestimmen, ob mindestens eine weitere Mehrträgervorrichtung (102), die mit der Mehrträgervorrichtung (104) über ein direktes Link kommuniziert, einen ersten Unterträgerabstand (Fsc1) verwendet, der kleiner ist als ein zweiter Unterträgerabstand (Fsc2), der von der Mehrträgervorrichtung (104) verwendet wird;
Unterträger identifizieren, die beiden Mehrträgervorrichtungen gemeinsam sind (102, 104);
durch die Mehrträgervorrichtung (104) die Anzahl der von der Mehrträgervorrichtung (104) verwendeten Symbole bestimmen, die in der Zeitdauer einem einzelnen von der weiteren Mehrträgervorrichtung verwendeten Symbol entspricht, und
aufeinanderfolgende identische Symbole (N2) erzeugen, die eine kombinierte Zeitdauer gleich einer Zeitdauer (T1) des einzelnen Symbols (N1) der mindestens einen weiteren Mehrträgervorrichtung (102) aufweisen.

6. Vorrichtung nach Anspruch 5, ferner zum Senden von Bakenmeldungen auf jedem von der Mehrträgervorrichtung (104) verwendeten Unterträger.

7. Vorrichtung nach einem der Ansprüche 5 oder 6, ferner zum Empfang von Bakenmeldungen, die von der weiteren Mehrträgervorrichtung (102) gesendet werden.

8. Vorrichtung nach Anspruch 7, ferner zur Bestimmung des ersten Unterträgerabstands (Fsc1), der von der weiteren Mehrträgervorrichtung (102) unter Verwendung der von der weiteren Mehrträgervorrichtung (102) gesendeten Bakenmeldungen verwendet wird.

## Revendications

1. Procédé comprenant :
la détermination, au niveau d'un second appareil à porteuses multiples (104), de savoir si un premier appareil à porteuses multiples (102) utilise ou non un premier espacement de sous-porteuses (Fsc1) inférieur à un second espacement de sous-porteuses (Fsc2) utilisé par le second appareil à porteuses multiples (104), dans lequel le premier appareil à porteuses multiples (102) et le second appareil à porteuses multiples communiquent directement en utilisant une liaison directe,
l'identification des sous-porteuses communes aux deux appareils à porteuses multiples (102, 104) ;
la détermination, par le second appareil à porteuses multiples (104), du nombre de symboles utilisés par le second appareil à porteuses multiples qui égale en durée un symbole unique utilisé par le premier appareil à porteuses multiples et
la génération, par le second appareil à porteuses multiples (104), de symboles consécutifs identiques (N2) ayant une durée combinée égale à une durée (T1) dudit symbole unique (N1) du premier appareil à porteuses multiples (102).

2. Procédé selon la revendication 1, comprenant en outre, à la fois par le premier et le second appareils à porteuses multiples (102, 104), l'envoi de messages de balise sur chaque sous-porteuse.

3. Procédé selon l'une quelconque des revendications précédentes, comprenant en outre la réception au niveau du second appareil à porteuses multiples (104) de messages de balise envoyés par le premier appareil à porteuses multiples (102).

4. Procédé selon la revendication 3, comprenant en outre au niveau du second appareil à porteuses multiples (104), la détermination du premier espacement de sous-porteuses (Fsc1) utilisé par le premier appareil à porteuses multiples (102) en utilisant les messages de balise envoyés par le premier appareil à porteuses multiples (102).

5. Appareil à porteuses multiples (104) comprenant :
un dispositif de contrôle ; et une mémoire couplée au dispositif de contrôle et comprenant des instructions qui, lorsq'elles sont exécutées par le dispositif de contrôle :
déterminent, si au moins un autre appareil à porteuses multiples (102) communiquant avec l'appareil à porteuses multiples (104) à l'aide d'une liaison directe, utilise ou non un premier espacement de sous-porteuses (Fsc1) inférieur à un second espacement de sous-porteuses (Fsc2) utilisé par l'appareil à porteuses multiples (104) ;
identifient des sous-porteuses communes aux deux appareils à porteuses multiples (102, 104) ;
déterminent, par l'appareil à porteuses multiples (104), le nombre de symboles utilisés par l'appareil à porteuses multiples (104) qui égale en durée un symbole unique utilisé par l'autre appareil à porteuses multiples et
génèrent des symboles consécutifs identiques (N2) ayant une durée combinée égale à une durée (T1) dudit symbole unique (N1) de l'autre ou des autres appareils à porteuses multiples (102).

6. Appareil selon la revendication 5, pour envoyer en outre des messages de balise sur chaque sous-porteuse utilisée par l'appareil à porteuses multiples (104).

7. Appareil selon l'une quelconque des revendications 5 ou 6, pour recevoir en outre des messages de balise envoyés par l'autre appareil à porteuses multiples (102).

8. Appareil selon la revendication 7, pour déterminer en outre le premier espacement de sous-porteuses (Fsc1) utilisé par l'autre appareil à porteuses multiples (102) en utilisant les messages de balise envoyés par l'autre appareil à porteuses multiples (102).
